# EUROPEAN PATENT APPLICATION

(11) **EP 3 272 895 A1**
(43) Date of publication of application: **24.01.2018**
(21) Application number: 16764875.7
(22) Date of filing: 11.03.2016
(51) Int. Cl.: C22C 38/00, B21D 22/20, C21D 1/18, C21D 9/00, C21D 9/46, C22C 38/14, C22C 38/58

(54) **STEEL SHEET FOR HOT PRESSING AND METHOD FOR PRODUCING SAME**

(30) Priority: 18.03.2015 JP 2015054873; 30.11.2015 JP 2015234099
(71) Applicant: Kabushiki Kaisha Kobe Seiko Sho (Kobe Steel, Ltd.), Kobe-shi, Hyogo 651-8585 (JP)
(72) Inventor: OMORI, Hiroyuki, Hyogo 675-0137 (JP); MIZUTA, Naoki, Hyogo 675-0137 (JP); ASAI, Tatsuya, Hyogo 675-0137 (JP)
(74) Representative: Müller-Boré & Partner Patentanwälte PartG mbB
(86) International application number: PCT/JP2016/057710
(87) International publication number: WO 2016/148045

(57) **Abstract**

Provided is a steel sheet for hot pressing, which stably ensures a high strength of a steel member and which enables good performance of blanking before hot pressing, while being capable of suppressing oxidization of the steel sheet surface and elimination of a galvanized layer during the hot pressing. This steel sheet for hot pressing is characterized by containing, in mass%, C: 0.15% or more to 0.40% or less, Si: 1.00% or more to 2.00% or less, Mn: 1.50% or more to 3.00% or less, Ti: (N×48/14)% or more to 0.10% or less, B: 0.0005% or more to 0.0050% or less, Al: more than 0% to 0.10% or less, P: more than 0% to 0.05% or less, S: more than 0% to 0.01% or less, and N: more than 0% to 0.010% or less with the balance being iron and inevitable impurities. This steel sheet for hot pressing is also characterized by having a dislocation density of 10 × 10¹⁴/m² or more, an area ratio of pearlite relative to the whole structure being 30% or more, and a tensile strength of 1100 MPa or less.

## Description

### Technical Field

The present invention relates to a steel sheet for hot pressing and a method for producing the same, and more particularly to a steel sheet for hot pressing and a method for producing the same, which stably ensures a high strength of a steel member and which enables good performance of blanking before hot pressing, while being capable of suppressing oxidization of the steel sheet surface and elimination of a galvanized layer during the hot pressing.

### Background Art

A so-called hot stamping is known as a technique for producing a member having a high strength by heating a steel sheet and thereafter performing hot pressing and cooling. Conventionally, a steel sheet used for the above hot pressing, that is, a steel sheet for hot pressing, is a steel sheet having a comparatively small amount of alloy elements and having a tensile strength of the steel sheet before heating being about 500 MPa to 700 MPa, which is not so high. Before the hot pressing, there is a need to perform blanking in order to cut the steel sheet into a predetermined blanking size. With a tensile strength of the above level, the blanking could be performed without generating damage or abrasion of the tool. For example, Patent Literature 1 proposes a method of producing a high-strength steel member having a tensile strength of 980 MPa or larger and having a low residual stress by performing post-processing such as trimming or piercing after hot pressing.

However, in recent years, there is proposed a steel sheet with enhanced hardenability by increasing the alloy elements as compared with the conventional steel sheet for hot pressing. For example, Patent Literature 2 proposes a steel sheet with which the mold cooling time after forming can be shortened by incorporating Cr, Mn, Cu, Ni, and the like. Such a steel sheet can enhance the pressing productivity of hot pressing and also enables multiple-step hot forming.

However, when the alloy elements in the steel sheet increase, the tensile strength of the steel sheet increases. When the tensile strength of the steel sheet is too high, there is a problem such as considerable increase in the tool damage during the blanking.

In the meantime, the steel sheet for hot pressing is heated to a high temperature before the hot pressing, in order to obtain a formed steel member having a high strength. However, when the heating temperature is a high temperature, oxidization of the steel sheet surface is liable to occur. Further, when a galvanized steel sheet is used as the steel sheet for hot pressing, the galvanized layer is liable to be eliminated. Accordingly, it is desired to set the heating temperature to be as low as possible in view of suppressing the oxidization of the steel sheet surface and elimination of the galvanized layer.

### Citation List

### Patent Literature

Patent Literature 1: Japanese Patent Publication No. 2006-130519
Patent Literature 2: Japanese Patent Publication No. 2006-212663

### Summary of Invention

### Problems to be Solved by the Invention

The present invention has been made in view of the aforementioned circumstances, and an object thereof is to establish a steel sheet for hot pressing and a method for producing the steel sheet for hot pressing which enables good performance of blanking before hot pressing and which is capable of suppressing oxidization of the steel sheet surface and elimination of the galvanized layer during the hot pressing even when the steel sheet contains alloy elements to stably ensure a high strength of the member. Hereafter, the property of "enabling good performance of blanking before hot pressing" may be referred to as "blanking property".

### Means for Solving the Problems

The steel sheet for hot pressing that has solved the aforementioned problems contains, in mass%:
C: 0.15% or more to 0.40% or less,
Si: 1.00% or more to 2.00% or less,
Mn: 1.50% or more to 3.00% or less,
Ti: (N×48/14)% or more to 0.10% or less,
B: 0.0005% or more to 0.0050% or less,
Al: more than 0% to 0.10% or less,
P: more than 0% to 0.05% or less,
S: more than 0% to 0.01% or less, and
N: more than 0% to 0.010% or less,
with the balance being iron and inevitable impurities, and having a dislocation density of 10 × 10¹⁴/m² or more, an area ratio of pearlite relative to a whole structure being 30% or more, and a tensile strength of 1100 MPa or less.

The above steel sheet for hot pressing may further contain, in mass%, one or more of the following (i) to (iii):
(i) at least one element selected from Mo and Cr in a sum of more than 0% to 0.50% or less,
(ii) at least one element selected from Cu and Ni in a sum of more than 0% to 0.50% or less, and
(iii) at least one element selected from the group consisting of Nb, V, and Zr in a sum of more than 0% to 0.10% or less.

The above steel sheet for hot pressing may have a zinc-based plating layer or an aluminum-based plating layer on at least one surface of the steel sheet.

The present invention also includes a method for producing the above steel sheet for hot pressing. The production method comprises, in order, coiling a steel satisfying a component composition of the steel sheet at 550°C or higher after hot-rolling the steel at a finishing rolling temperature: 890 to 950°C; and cold-rolling the steel sheet at a cold rolling rate of 20% or more, wherein the method further includes, when the tensile strength of the steel sheet after the cold rolling exceeds 1100MPa, annealing the steel sheet under conditions with an annealing temperature: 500°C or higher to 640°C or lower and a holding time of 500 seconds or less in a temperature range of 500°C or higher, after the cold rolling.

The present invention also includes a method for producing a steel member, comprising using the above steel sheet for hot pressing and performing hot pressing after heating at a heating temperature: 700 to 900°C. Hereafter, a steel member obtained by using the steel sheet for hot pressing of the present invention and performing hot pressing may be referred to as a "member".

### Effects of the Invention

The present invention provides a steel sheet for hot pressing which enables good performance of blanking before hot pressing and which is capable of suppressing oxidization of the steel sheet surface and elimination of the galvanized layer during the hot pressing even when the steel sheet contains a lot of alloy elements such as Si to stably ensure a high strength of the steel member.

### Brief Description of Drawings

FIG. 1 is a view showing a heat treatment pattern in the Examples.
FIG. 2 is a view showing a relationship between the average cooling rate CR2 and the micro Vickers hardness for each Si amount in the steel sheet in the Examples.
FIG. 3 is a view showing a method for determining the minimum heating temperature needed for a micro Vickers hardness of 400 Hv from the relationship between the heating temperature and the micro Vickers hardness.

### Description of Embodiments

The present inventors have made repeated eager researches in order to solve the aforementioned problems. First, the present inventors have paid attention to Si in the steel sheet in order to stably ensure a high strength of the member.

According to the hot pressing technique, a material is once austenitized and thereafter cooled to generate martensite in a microstructure of a member, thereby achieving a higher strength. It is well known that the strength of the member is dependent on the state of presence of carbon in the steel. Si is an important element for controlling the deposition state of the carbon. Specifically, Si is an element that suppresses tempering and softening of martensite, which is generated in the hot pressing process, during the cooling. By this effect of Si, a stable strength can be obtained irrespective of the position of sites even when a cooling unevenness is generated between the sites of the member during the cooling of the member after hot pressing, that is, during the hardening, specifically, even when a difference in the time of contact with the mold is generated between the sites of the member to eventually generate a difference in the cooling degree by shortening of the mold keeping time or by omission of mold keeping.

In order to obtain the effect, it is necessary to incorporate Si at 1.00% or more. The aforesaid percentage (%) means mass% in the chemical component composition. The same applies hereafter. The Si amount is preferably 1.05% or more, more preferably 1.15% or more. However, Si is also an element that raises the Ac₃ point which is the austenitization temperature of the steel sheet. When the Si amount is excessively large, this Ac₃ point rises, making it necessary to raise the heating temperature in the hot pressing and, as a result, oxidization of the steel sheet surface and elimination of the galvanized layer are liable to occur. Accordingly, the Si amount is set to be 2.00% or less. The Si amount is preferably 1.80% or less, more preferably 1.60% or less.

The present inventors have further made eager researches in order to obtain good performance of blanking before the hot pressing even when a lot of alloy elements such as Si are contained as described above.

In order to obtain good performance of blanking before the hot pressing, the tensile strength of the steel sheet used in the blanking must be suppressed. The present inventors have confirmed that, when the tensile strength of the steel sheet exceeds 1100 MPa, damage of the mold for cutting is large, so that a frequent maintenance of the mold or the like is necessary. Accordingly, the tensile strength of the steel sheet for hot pressing is set to be 1100 MPa or less. The tensile strength is preferably 1000 MPa or less, more preferably 950 MPa or less. The lower limit of the tensile strength of the steel sheet in the component range of the present invention is about 440 MPa or more. Hereafter, the above "tensile strength of steel sheet" may be referred to as "steel sheet strength".

The above tensile strength may be measured by a tensile test. The shape of a test piece is not particularly limited; however, the shape is preferably set to be a JIS No. 5 or JIS No. 13 B shape, as shown, for example, in the Examples described below.

Further, the present inventors have made eager researches in order to obtain a steel sheet in which the above tensile strength is suppressed. As a result, it has been found out that it is important to generate pearlite in a microstructure of the steel sheet, as shown below.

### Area ratio of pearlite relative to whole structure being 30% or more

As described above, a member strength is stably obtained by incorporation of a comparatively large amount of Si. However, when a lot of alloy elements such as Si or later-mentioned Mn are contained, a hard microstructure such as martensite or bainite is liable to increase, and accordingly the steel sheet strength increases. In order to obtain a steel sheet in which the tensile strength is suppressed, it is necessary to form a microstructure in which the amount of a hard phase such as the above-described martensite or bainite is as little as possible. In view of this, pearlite is positively incorporated in the present invention. Also, when ferrite is large in amount and pearlite is small in amount, problems such as the following are raised though the tensile strength is suppressed. That is, when pearlite is small in amount, carbide is locally concentrated, so that carbon diffusion in reverse transformation during heating is retarded. When the temperature raising rate is constant, it is necessary to compensate for the retardation of the diffusion time with the heating temperature. As a result of this, the minimum heating temperature for ensuring a certain degree or more of the strength by the hot pressing must be raised. When this minimum heating temperature rises, the oxidization of the steel sheet surface and elimination of the galvanized layer are liable to occur, as described above. From this viewpoint as well, it is necessary to incorporate pearlite positively.

The present inventors have specifically found out that the area ratio of pearlite relative to the whole structure must be set to be 30% or more in order to achieve a tensile strength of the steel sheet: 1100 MPa or less and to lower the above minimum heating temperature. The above area ratio of pearlite is preferably 35% or more, more preferably 40% or more. Generation of ferrite or a hard phase such as martensite or bainite can be suppressed by setting the above area ratio of pearlite to be 30% or more. The larger the pearlite fraction is, the more the hard phase can be reduced. However, increase in the pearlite fraction to a degree more than necessary leads to disadvantages on the steel sheet production, such as extension of the time for keeping after hot-roll coiling. In the component range of the present invention, an upper limit of the above area ratio of pearlite is about 90%. Preferably, the structure other than pearlite is mainly made of ferrite; however, a hard phase such as bainite or martensite may be present provided that the ratio of the hard phase relative to the whole structure is 10 area% or less.

A method for measuring the above area ratio of pearlite can be determined by the method shown in the later-mentioned Examples.

As described in detail in the production method mentioned later, setting the finishing rolling temperature to a certain degree or more and raising the coiling temperature during the hot-rolled steel sheet production may be mentioned in order to achieve the above pearlite area ratio: 30% or more by suppressing the generation of ferrite or a hard phase such as martensite or bainite.

Next, the present inventors have made eager researches in order to suppress the oxidization of the steel sheet surface and elimination of the galvanized layer during the hot pressing. It is effective to suppress as much as possible the temperature of heating immediately before the hot pressing in order to suppress the oxidization of the steel sheet surface and elimination of the galvanized layer during the hot pressing. However, when the heating temperature is lowered, it is difficult to ensure the strength of the member obtained by the hot pressing. In particular, when the heating rate is high as in electrical heating, it is desired to set the heating temperature to be high in order to obtain a high strength.

Accordingly, the present inventors have made eager researches on means for obtaining a member having a strength of a certain degree or more by the hot pressing even when the heating temperature during the hot pressing is lowered. As a result thereof, the present inventors have found out that it is sufficient that the steel sheet used in the hot pressing has a dislocation density of a certain degree or more, as shown below.

### Dislocation density of steel sheet being 10 × 10¹⁴/m² or more

Austenitization during the heating can be promoted by enhancing the dislocation density of the microstructure. When the austenitization during the heating can be promoted, the heating temperature for ensuring the member strength can be lowered, and as a result, the oxidization of the steel sheet surface and elimination of the galvanized layer can be suppressed.

In the present invention, studies have been made on the dislocation density for realizing the above hardness with a heating temperature: 900°C or lower during the hot pressing in order that the strength after the hot pressing, that is, the strength of the member, achieves at least 400 Hv in terms of the micro Vickers hardness, as shown in the Examples described later.

As a result, the present inventors have found out that it is sufficient that the dislocation density of the steel sheet is 10 × 10¹⁴/m² or more. The dislocation density is preferably 15 × 10¹⁴/m² or more, more preferably 20 × 10¹⁴/m² or more. On the other hand, when the dislocation density is too high, the steel sheet strength increases to a degree more than necessary, and it becomes difficult to satisfy a tensile strength of 1100 MPa or lower. Accordingly, the dislocation density is preferably 30 × 10¹⁴/m² or less, more preferably 28 × 10¹⁴/m² or less.

A method for measuring the above dislocation density can be determined by the method shown in the later-mentioned Examples.

A steel sheet satisfying the dislocation density: 10 × 10¹⁴/m² or more can be obtained by performing cold rolling under the later-mentioned conditions at the time of producing the steel sheet. There are cases in which annealing is performed after the cold rolling, so as to impart plating to the steel sheet or to adjust the steel sheet strength. However, because the dislocation density introduced into the steel sheet is liable to decrease due to the annealing, it is necessary to maintain the dislocation density by appropriately controlling the annealing conditions, particularly the annealing temperature. The details will be described in the production method mentioned later.

As shown above, the Si amount, microstructure, and dislocation density of the steel sheet, which are characteristic features of the present invention, have been described. Next, elements other than the above Si will be described. Here, the component composition of the steel member is the same as that of the steel sheet, including the Si described above.

### C: 0.15% or more to 0.40% or less

C is an element that is important for ensuring the strength of the member obtained by hot pressing. In order to achieve 400 Hv or more of the micro Vickers hardness as a member strength, it is necessary that the C amount is set to be 0.15% or more. The C amount is preferably 0.18% or more, more preferably 0.20% or more. On the other hand, when the C amount exceeds 0.40%, the strength of the welded part decreases. The C amount is preferably 0.38% or less, more preferably 0.35% or less.

### Mn: 1.50% or more to 3.00% or less

Mn is an element that is effective for obtaining a stable member strength. In further detail, Mn is an element that is effective for obtaining a stable member strength in the hot pressing by suppressing generation of a soft layer such as ferrite during the period from the heating to the start of hot pressing or by suppressing generation of a bainite phase or a soft layer such as ferrite during the hot pressing and during the cooling process after hot pressing. In order that this effect is exhibited, it is necessary that the Mn amount is set to be 1.50% or more. The Mn amount is preferably 1.60% or more, more preferably 1.80% or more, and still more preferably 2.00% or more. On the other hand, when the Mn amount is excessively large, the steel sheet strength before the hot pressing rises considerably, so that the Mn amount is set to be 3.00% or less. The Mn amount is preferably 2.50% or less, more preferably 2.30% or less.

### Ti: (N×48/14)% or more to 0.10% or less

Ti is an element that is important for fixing N in the steel sheet and ensuring the hardenability by B. For this reason, the Ti amount must be at least such that all of the N in the steel sheet is fixed as TiN. Also, Ti has an effect of reducing the size of the microstructure, and also has an effect of improving the toughness of the member. In view of these, the Ti amount is set to be (N×48/14)% or more. The above N denotes the N amount in mass% in the steel sheet. The Ti amount is preferably 0.02% or more, more preferably 0.03% or more. On the other hand, when the Ti amount is excessively large, the steel sheet strength rises considerably, so that the Ti amount is set to be 0.10% or less. The Ti amount is preferably 0.08% or less, more preferably 0.06% or less.

### B: 0.0005% or more to 0.0050% or less

B is an element that is important for improving the hardenability of the steel sheet. In particular, the member strength can be stably obtained by incorporating B to improve the hardenability. In order that the effect is exhibited, it is necessary to incorporate B at 0.0005% or more. The B amount is preferably 0.0010% or more, more preferably 0.0015% or more. On the other hand, when the B amount is excessively large, a coarse iron boron compound is deposited to lower the toughness. Accordingly, the B amount is set to be 0.0050% or less. The B amount is preferably 0.0040% or less, more preferably 0.0035% or less.

### Al: more than 0% to 0.10% or less

Al is an element that is necessary for deoxidation. In view of this, Al can be incorporated at more than 0%, or further, at 0.01% or more. However, when the Al amount is excessively large, the Ac₃ point of the steel sheet rises. Enhancement of the Ac₃ point of the steel sheet gives rise to a necessity of raising the heating temperature during the hot pressing, so that the oxidization of the steel sheet surface and elimination of a galvanized layer are liable to occur, as described above. Accordingly, the Al amount is set to be 0.10% or less. The Al amount is preferably 0.08% or less, more preferably 0.06% or less.

P, S, and N are elements that are inevitably contained and must be suppressed in view of ensuring the weldability and toughness of the member and preventing the surface flaws. In view of these, the P amount is set to be 0.05% or less, preferably 0.02% or less; the S amount is set to be 0.01% or less, preferably 0.008% or less; and the N amount is set to be 0.010% or less, preferably 0.0060% or less. Furthermore, the amount of O, which is an inevitable impurity, is preferably suppressed to be 0.001% or less from a viewpoint similar to the above one. Since it is difficult to set the amount of any of these elements to be zero, the lower limit is more than 0%.

The components of the steel sheet of the present invention and the steel member obtained by using the steel sheet are as described above, and the balance is made of iron and inevitable impurities. Also, the hardenability and the like can be further enhanced by incorporating a suitable amount of the selected elements shown below in addition to the above elements. Hereafter, these elements will be described in detail.

### At least one element selected from Mo and Cr: in a sum of more than 0% to 0.50% or less

Mo and Cr are elements that contribute to improvement of hardenability. In order that the effect is exhibited, it is preferable that at least one element selected from Mo and Cr is incorporated in a sum of more than 0%, more preferably in a sum of 0.01% or more. The above term "in a sum" means a single amount when one of the elements is singly contained, and means a sum amount when a plurality of elements are contained. The same applies hereafter.

On the other hand, when these elements are contained in an excessively large amount, the steel sheet strength rises, so that the content of at least one element selected from Mo and Cr is preferably set to be 0.50% or less in a sum, more preferably 0.30% or less in a sum.

### At least one element selected from Cu and Ni: in a sum of more than 0% to 0.50% or less

Cu and Ni are elements that contribute to improvement of the delayed fracture resistance of the member and can be incorporated in accordance with the needs. In order that the effect is exhibited, it is preferable that at least one element selected from Cu and Ni is incorporated in a sum of more than 0%, more preferably in a sum of 0.05% or more. However, when these elements are contained in an excessively large amount, this will cause generation of surface flaws on the steel sheet, eventually leading to surface flaws of the member. Accordingly, at least one element selected from Cu and Ni is incorporated preferably in a sum of 0.50% or less, more preferably in a sum of 0.30% or less.

### At least one element selected from the group consisting of Nb, V, and Zr in a sum of more than 0% to 0.10% or less

Nb, V, and Zr produce an effect of reducing the scale of the microstructure in the same manner as Ti. Accordingly, for example, the content of Ti may be set to be the minimum amount that is needed for fixing N, so as to achieve scale reduction of the microstructure with these elements. In particular, these elements are more effective for suppression of growth of austenite grains at a high temperature. In view of this, it is preferable that at least one element selected from the group consisting of Nb, V, and Zr is incorporated in a sum of 0.005% or more, more preferably in a sum of 0.010% or more. On the other hand, when these elements are contained in an excessively large amount, the steel sheet strength before the hot pressing rises, so that the content of at least one element selected from the group consisting of Nb, V, and Zr is preferably set to be 0.10% or less in a sum, more preferably 0.050% or less in a sum.

The steel sheet of the present invention may have a zinc-based plating layer or an aluminum-based plating layer on at least one surface of the steel sheet. For example, in the case of the zinc-based plating layer, a plating adhesion amount can be about 10 to 90 g/m² per one surface.

Next, a method of producing the steel sheet for hot pressing of the present invention will be described. In order to obtain the steel sheet of the present invention, the conditions of the coiling step after hot rolling and the conditions of the cold rolling step and the annealing step must be controlled as shown below. In other words, the steps up to the coiling step are not particularly limited. For example, a steel satisfying the above component composition is melted and cast by an ordinary method to obtain a cast piece such as a slab. In performing hot rolling, the cast piece is heated; however, the heating conditions are not particularly limited, so that the cast piece may be heated at a temperature of, for example, about 1100 to 1300°C. Subsequently, hot rolling is performed to obtain a hot-rolled steel sheet. In hot rolling, the finishing rolling temperature is set to be within a range of 890 to 950°C. When the finishing rolling temperature is 890°C or lower, ferrite increases in amount, and pearlite area ratio decreases, so that a prescribed amount of pearlite area ratio cannot be ensured. The finishing rolling temperature is preferably 900°C or higher. On the other hand, in view of ensuring the productivity, the finishing rolling temperature is set to be 950°C or lower, preferably 930°C or lower.

After the hot rolling, the method is set to include, in order:
(a) coiling the steel sheet at 550°C or higher; and
(b) cold rolling the steel sheet at a cold-rolling rate of 20% or more.

Hereafter, each step will be described in detail.

### (a) Coiling the steel sheet at 550°C or higher

A prescribed amount of pearlite can be ensured by setting the temperature of coiling the steel sheet to be 550°C or higher. By enhancing the coiling temperature in this manner, the strength of the hot-rolled steel sheet may be lowered, and the cold-rolling rate described later can be enhanced. The coiling temperature is preferably 580°C or higher, more preferably 630°C or higher. An upper limit of the coiling temperature is about 750°C from the viewpoint of deterioration by oxidation of the steel sheet surface.

Also, the pearlite fraction can be further increased by adding a step of keeping in a temperature range of 500°C or higher for three hours or more after coiling at a predetermined temperature. In this case, the coil is put, for example, into a temperature-keeping box, and the temperature is kept under conditions with a keeping temperature: 500°C or higher, preferably 550°C or higher, with the upper limit thereof set to be about 650°C, and with a temperature-keeping time: one hour or more, preferably 2 hours or more, with the upper limit thereof set to be about 4 hours.

When the strength of the hot-rolled steel sheet can be reduced in the above step (a), the cold rolling rate can be further increased in the following cold rolling. As a result, the dislocation density of the steel sheet can be enhanced, thereby advantageously functioning for reduction of the heating temperature during the hot pressing.

### (b) Cold rolling the steel sheet at a cold-rolling rate of 20% or more

The cold rolling is effective means for introducing dislocation into the steel sheet. The cold-rolling rate, that is, the rate of cold rolling, is set to be 20% or more in order to introduce dislocation at a prescribed density or more by cold rolling. The cold-rolling rate is preferably 25% or more, more preferably 30% or more. On the other hand, an upper limit of the cold rolling rate may be appropriately set in accordance with the equipment specification, and may be set to be, for example, 80% or less. In the present invention, the tensile strength of the steel sheet is set to be 1100 MPa or less; however, the above cold-rolling rate may be set to be, for example, less than 60% in order to suppress the tensile strength to have a lower value of 1000 MPa or less.

The steel sheets for hot pressing of the present invention include a steel sheet as is cold-rolled and a steel sheet subjected to annealing after cold rolling. When the tensile strength after the cold rolling is 1100 MPa or less, the steel sheet may be as is cold-rolled. However, by cold rolling, the tensile strength of the steel sheet tends to be high, though dislocation can be introduced. Accordingly, when the tensile strength of the steel sheet after the cold rolling, that is, the tensile strength of the steel sheet as is cold-rolled, exceeds 1100 MPa, the steel sheet is further subjected to an annealing step under the conditions shown in (c) below after the cold rolling, thereby to achieve reduction of the tensile strength.

(c) Annealing step carried out under conditions with an annealing temperature: 500°C or higher to 640°C or lower and a holding time of 500 seconds or less in a temperature range of 500°C or higher.

In the annealing step, reduction of the steel sheet strength after the cold rolling can be achieved by heating the steel sheet at an annealing temperature: 500°C or higher. The above annealing temperature is preferably 550°C or higher. On the other hand, when the annealing temperature exceeds 640°C, the dislocation density that has been increased by cold rolling rapidly decreases. Accordingly, the annealing temperature is set to be 640°C or lower. The annealing temperature is preferably 620°C or lower, more preferably 600°C or lower.

Also, the holding in a temperature range of 500°C or higher is set to be 500 seconds or less in order to suppress decrease in the dislocation density. The holding time is preferably 450 seconds or less, more preferably 400 seconds or less, and still more preferably 350 seconds or less. Further, the above holding time is preferably 10 seconds or more, more preferably 20 seconds or more, in order to achieve reduction of the steel sheet strength.

A method of heating in the annealing may be, for example, furnace heating, electrical heating, induction heating, or the like. An atmosphere of the annealing is not particularly limited; however, the atmosphere is preferably a non-oxidizing atmosphere or a reducing atmosphere.

A zinc-based plating layer or an aluminum-based plating layer may be formed on at least one surface of the steel sheet. A method of forming the zinc-based plating layer or aluminum-based plating layer is not particularly limited; however, in the case of imparting galvanization to the steel sheet, the plating layer may be formed by immersion of the steel sheet into a plating bath after cooling to about 460°C subsequent to the annealing. The plating layer may be further alloyed in accordance with the needs. The alloying in this case is preferably carried out at a comparatively lower temperature of 500°C or lower in view of suppressing decrease in the dislocation density. Alternatively, the alloying conditions and the cooling conditions after alloying may be set so that the holding time in a temperature range of 500°C or higher and 640°C or lower in the above (c) annealing step and in the alloying treatment step, that is, the step of heating to the alloying temperature → keeping at the alloying temperature in accordance with the needs → cooling, will be 500 seconds or less.

### Hot pressing

In the present invention, the conditions for hot pressing, that is, hot stamping, are not particularly limited, and a method that is ordinarily carried out may be adopted. The hot pressing includes a heating step, a stamping step, and a cooling step. Hereafter, each step will be described.

### Heating step

Hot pressing is carried out after heating to a heating temperature: 700 to 900°C. A method of the heating may be, for example, furnace heating, electrical heating, induction heating, or the like. The heating temperature is set to be 700°C or higher in order to achieve sufficient austenitization. The heating temperature is preferably 750°C or higher. On the other hand, as described above, when this heating temperature is too high, oxidation on the steel sheet surface is liable to occur, and also, when a galvanized steel sheet is used as the steel sheet for hot pressing, the galvanized layer is liable to be eliminated. Accordingly, the heating temperature is set to be 900°C or lower in view of suppressing the oxidation on the steel sheet surface and elimination of the galvanized layer. The heating temperature is more preferably 880°C or lower.

The keeping time at the heating temperature is preferably 30 minutes or less, more preferably 15 minutes or less, and still more preferably 7 minutes or less. By controlling the keeping time in this manner, the grain growth of austenite is suppressed, and characteristics such as the hot drawing property and the toughness of the hot-stamp formed product can be improved. A lower limit of the keeping time is not particularly limited as long as the lower limit reaches the above temperature range. However, since strict control is difficult in a practical sense, it is sufficient that the keeping time is one minute or more in the case of furnace heating, and is several seconds or more in the case of electrical heating or induction heating.

### Stamping step

In the stamping step, the steel sheet heated in the above heating step is subjected to stamping, that is, a pressing treatment. A starting temperature of the stamping is not particularly limited.

### Cooling step

In the cooling step, the steel sheet heated in the above heating step and the steel member obtained by performing stamping on the steel sheet are cooled. The cooling herein performed includes natural cooling, and the cooling of the steel sheet starts immediately after the heating step.

An example of the above hot stamping step may be a method of completing the forming, for example, at a temperature of about 550°C or higher after heating the steel sheet, for example, to 700 to 900°C. The above "completing the forming" refers to the time point at which the mold reaches the lower dead point position. Here, in ordinary hot pressing, hardening reinforcement of the whole steel sheet is carried out; however, hardening reinforcement of only a partial region of the steel sheet can be carried out by limiting the region to be heated and the region of contact with the mold to a part of the steel sheet.

The steel component obtained by performing hot pressing is subjected to trimming or cutting such as drilling to obtain, for example, a steel member for an automobile.

The steel member can be used as a steel member for an automobile in a state as it is or after being subjected to the above treatment or the like. The steel member for an automobile may be, for example, an impact bar, a bumper, a reinforcement, a center pillar, or the like.

The present application claims the rights of priority based on Japanese Patent Application No. 2015-054873 filed on March 18, 2015 and Japanese Patent Application No. 2015-234099 filed on November 30, 2015. The entire contents of the specifications of Japanese Patent Application No. 2015-054873 filed on March 18, 2015 and Japanese Patent Application No. 2015-234099 filed on November 30, 2015 are incorporated in the present application by reference.

### Examples

Hereafter, the present invention will be described more specifically by way of Examples; however, the invention is not limited by the following Examples and can be carried out while including additional modifications within a scope conforming to the gist disclosed heretofore and hereinafter, all such modifications being encompassed within the technical scope of the invention.

### Example 1

In this Example 1, the influence that the Si amount in the steel sheet exerts on the relationship between the cooling rate during the hot pressing and the hardness of the steel sheet was examined.

A steel ingot having a weight of 50 kg and satisfying the component composition shown in Table 1 was fused, and this steel ingot was heated to 1150°C and roughly rolled to fabricate a steel sheet having a thickness of 30 mm. The "sol.Al amount" in Table 1 means an Al amount as prescribed in the present invention. In Table 1 and the later-mentioned Table 3, the sections of elements that were not added are marked with "-". The above steel sheet was heated again to 1250°C and hot-rolled to fabricate a hot-rolled steel sheet having a thickness of 2.3 mm. During this, the finishing rolling temperature was set to be 920°C and, after the hot rolling was finished, the steel sheet was cooled down to 650°C with water, and thereafter put into a keeping furnace having an in-furnace temperature of 650°C and kept for 30 minutes in order to simulate a cooling state after coiling in an actual production line. After the keeping, the steel sheet was taken out from the keeping furnace and subjected to natural cooling. This steel sheet was pickled to remove an oxide scale on the surface and subsequently subjected to cold rolling at a cold rolling rate of 39% to obtain a cold-rolled steel sheet having a thickness of 1.4 mm. The tensile strength of the steel sheet as was hot-rolled before being cold-rolled was 626 MPa in all cases, and the tensile strength of the steel sheet as was cold-rolled was 1023 MPa in all cases.

**[Table 1]**

| Steel type | Chemical component composition* (mass %) | | | | | | | | | | | | N × 48/14 (mass %) |
|---|---|---|---|---|---|---|---|---|---|---|---|---|---|
| | C | Si | Mn | P | S | sol.Al | Cr | N | B | Ti | Nb | V | |
| A | 0.21 | 1.01 | 2.03 | 0.015 | 0.006 | 0.041 | - | 0.0035 | 0.0021 | 0.020 | - | - | 0.012 |
| B | 0.23 | 0.18 | 1.29 | 0.011 | 0.005 | 0.043 | 0.23 | 0.0049 | 0.0029 | 0.024 | - | - | 0.017 |

| | | | | | | | | | | | | | |
|---|---|---|---|---|---|---|---|---|---|---|---|---|---|
| *Balance: iron and inevitable impurities | | | | | | | | | | | | | |

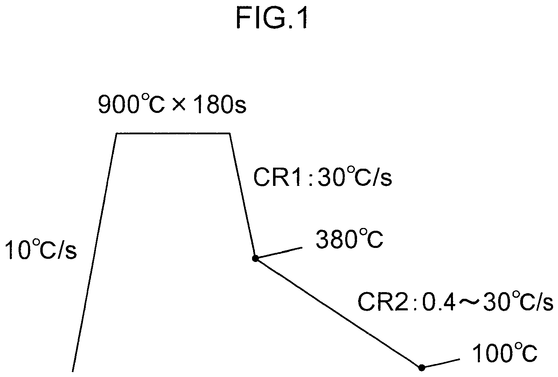

Next, with use of the above cold-rolled steel sheet, a thermal treatment having a pattern shown in Table 1 was carried out by using a thermal treatment simulating device manufactured by SHINKU-RIKO, Inc. This thermal treatment simulates a thermal history at the time of obtaining a high-strength member by performing hot pressing. In this thermal treatment, after the steel sheet is heated to 900°C and kept for 180 seconds, the steel sheet is subjected to press-forming before the temperature reaches 380°C in the case of hot pressing. However, in the present Example, forming was not carried out, and the steel sheet was cooled down to 380°C at CR1: 30°C/s and subsequently cooled down to 100°C at CR2: 0.4 to 30°C/s, as shown in FIG. 1. Here, from 100°C to room temperature, the steel sheet was left to stand to be cooled.

In the present Example, CR2 which is the average cooling rate from 380°C to 100°C was changed as described above. This is to simulate the difference in the degree of contact with the mold depending on the sites of the steel sheet, that is, the difference in the cooling rate depending on the sites of the steel sheet, during the hot pressing.

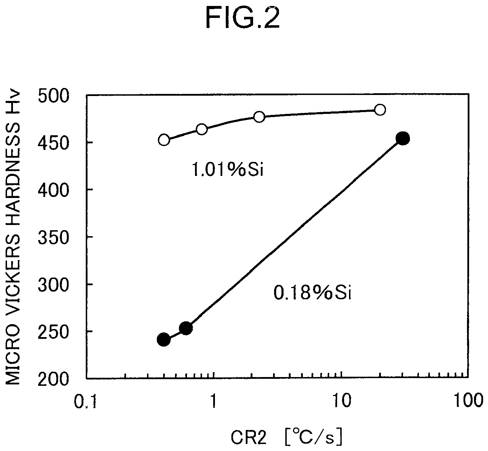

The hardness of the steel sheet after the thermal treatment was measured. With regard to the hardness, a micro Vickers hardness at arbitrary five places was measured under conditions with a measurement load of 9.8 N at a 1/4 thickness position in the section in the thickness direction of the steel sheet, and an average value was determined. Further, the relationship between the micro Vickers hardness and the above various CR2 simulating the cooling unevenness among the sites after forming was put in order for each Si amount in the steel sheet. The results are shown in FIG. 2.

From the results of FIG. 2, it will be understood that, when the Si amount in the steel sheet is insufficient as shown by the steel type B in Table 1, the hardness changes in accordance with the change in CR2 after the hot pressing, as shown by the symbol "●" in FIG. 2. In contrast, in the case of a steel sheet containing a large amount of Si as prescribed, as shown by the steel type A in Table 1, a stable member hardness can be obtained even when the cooling rate after hot pressing changes, as shown by the symbol "○" in FIG. 2. In other words, it will be understood that a stable strength can be ensured irrespective of the sites even when cooling rate unevenness occurs among the sites after forming.

### Example 2

In this Example 2, the influence that the dislocation density of the steel sheet exerts on the heating temperature during the hot pressing was examined. In further, detail, the influence that the dislocation density of the steel sheet exerts on the heating temperature needed for ensuring a strength of a certain degree or more by the hot pressing, that is, on the minimum heating temperature, was examined.

In Nos. 1 and 2 in Table 2, a cold-rolled steel sheet was prepared in the following manner. A hot-rolled steel sheet being the steel type A shown in Table 1 and having a thickness of 3.2 mm was fabricated under the same conditions as in Example 1 and, after an oxide scale generated during the hot rolling was removed with hydrochloric acid, cold rolling was performed at a cold rolling rate shown in Table 2, so as to prepare cold-rolled steel sheets having respective dislocation densities. Also, in Nos. 3 to 7 in Table 2, the steel sheet was hot-rolled at a finishing rolling temperature of 920°C and coiled at a coiling temperature of 650°C by the same method as in Example 3 described later, and cold-rolled steel sheets having various dislocation densities were prepared by changing the cold-rolling rate as shown in Table 2. Here, Nos. 3 to 5 and 7 are the same as Nos. 7 to 10 in Table 4 of Example 3 described later.

### Measurement of dislocation density

The dislocation density of a steel sheet was determined by the X-ray diffraction method. The details are as follows. As a measurement device, an X-ray diffraction device RINT-1500 manufactured by Rigaku Corporation was used. Specifically, with Co used as an X-ray source target, the line source output was set to be 40 kV - 200 mA, and the line source was monochromatized by use of a light reception monochromator. A measurement sample was placed in a diffractometer, and X-ray diffraction intensity was measured by continuous measurement with 2θ = 40° to 130°.

In taking up the diffraction intensity, the slit conditions were set to be with a divergence angle of 1°, a scattering angle of 1°, and a slit width of 0.15 mm, and the rotation speed of the measurement sample (X-ray scanning speed) was set to be 1.2°/min with the sampling width set to be 0.012° as an interval

From the X-ray diffraction intensity data obtained by the above measurement, that is, from an X-ray diffraction profile, a diffraction peak width (half-value width) of (110), (211), and (220) planes which are crystal diffraction planes of α-Fe were determined by peak fitting. This peak width includes both of an intrinsic value that the measurement device itself has and change in an apparent peak width by 2θ, so that these influences were corrected with a measurement result of a Si standard powder sample (NIST rod number 640c), and the dislocation density of each sample was calculated by the Williamson-Hall method using this corrected value. For the Williamson-Hall method, reference may be made to the literature "Materials and Processes Vol. 17 (2004) P396-P399".

### Measurement of minimum heating temperature needed for ensuring strength of a certain degree or more by hot pressing

Next, with use of each cold-rolled steel sheet, the minimum heating temperature needed for ensuring a strength of a certain degree or more by hot pressing was determined in the following manner. That is, as a thermal treatment that simulated the heating in the hot pressing step, a cold-rolled steel sheet was heated to various heating temperatures and, after the heating temperatures were reached, the steel sheet was left to stand to be cooled to room temperature without being kept, so as to obtain a steel sheet for testing. The above thermal treatment was carried out by using a hot process simulating device "Thermomaster Z" manufactured by Fuji Electronic Industrial Co., Ltd. Also, an average heating rate from room temperature to the above heating temperatures was set to be 100°C/s. In the present Example, the thickness of the obtained cold-rolled steel sheet varies because the cold-rolling rate varies as described above. In order to eliminate the difference in the natural cooling rate by this thickness, a steel sheet obtained by grinding the steel sheet after cold rolling to unify the thickness to 1.4 mm was used in the above thermal treatment.

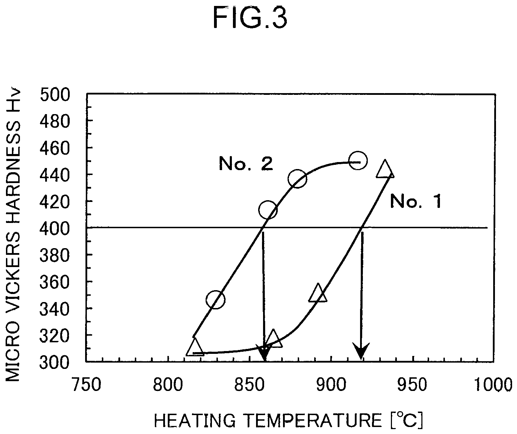

Next, a micro Vickers hardness was measured at five points with respect to the steel sheet of each heating temperature at a t/4 thickness position of the above steel sheet for testing, and an average value was determined. Further, as exemplified in FIG. 3 with respect to Nos. 1 and 2 of Table 2, a curve showing a relationship between the heating temperature and the above micro Vickers hardness was determined. In FIG. 3, "○" represents the data of No. 2 having a cold-rolling rate of 39%, and "Δ" represents the data of No. 1 having a cold-rolling rate of 0%. As indicated by arrows in FIG. 3, the heating temperature at the intersection of the line of the micro Vickers hardness of 400 Hv and each curve was determined as the minimum heating temperature.

Table 2 shows the results of the dislocation density and the minimum heating temperature.

**[Table 2]**

| No. | Steel type | Cold-rolling rate | Dislocation density | Minimum heating temperature |
|---|---|---|---|---|
| | | (%) | (× 10¹⁴/m²) | (°C) |
| 1 | A | 0 | 1.03 | 920 |
| 2 | A | 39 | 25.4 | 860 |
| 3 | A | 52 | 26.1 | 810 |
| 4 | C | 13 | 5.0 | 910 |
| 5 | C | 22 | 15.9 | 855 |
| 6 | C | 39 | 25.4 | 840 |
| 7 | C | 60 | 29.1 | 810 |

From Table 2, the following will be understood. As shown in Nos. 1 and 4, when the dislocation density was extremely small, the minimum heating temperature was high. In contrast, when the dislocation density was high as in Nos. 2, 3 and 5 to 7, the minimum heating temperature was suppressed to be lower. In other words, by performing cold rolling with a cold-rolling rate of a certain degree or more, a dislocation density of a certain degree or more is introduced and, by using this steel sheet in which the dislocation density of a certain degree or more has been introduced for hot pressing, the heating temperature during the hot pressing that is needed for ensuring a strength of a certain degree or more can be greatly suppressed. When the heating temperature during the hot pressing can be greatly suppressed in this manner, the oxidization of the steel sheet surface and elimination of the galvanized layer during the hot pressing can be suppressed.

### Example 3

In Example 3, the influence that the conditions for producing the steel sheet exert on the microstructure and dislocation density, and eventually on the tensile strength of the steel sheet and minimum heating temperature, was examined.

By using a steel ingot of steel type AA having a component composition in mass% of C: 0.22%, Si: 1.14%, Mn: 2.25%, P: 0.010%, S: 0.005%, sol.Al: 0.038%, N: 0.0035%, B: 0.0022%, and Ti: 0.021%, with the balance being iron and inevitable impurities, the component composition of the steel type AA almost entirely coinciding with the component composition of the steel type A of Table 1 or the steel type C of Table 3, and steel ingots of the steel types C to J of Table 3, hot rolling was carried out at a heating temperature of 1200°C and with a finishing rolling temperature shown in Table 4 in an actual machine, and the steel sheet was coiled at a coiling temperature shown in Table 4 to produce a coil of the hot-rolled steel sheet having each thickness shown in Table 4. In Table 4, No. 1 represents a steel sheet as was hot-rolled.

After the above hot rolling, pickling was carried out and, in Nos. 2, 3, and 7 to 21 of Table 4, cold rolling was carried out at a cold-rolling rate shown in Table 4, so as to obtain a cold-rolled steel sheet having each thickness shown in Table 4. In the above Nos. 7 to 21, experiments were conducted by adjusting the thickness of the hot-rolled steel sheet and the thickness of the cold-rolled steel sheet in order to obtain a desired cold-rolling rate. Also, in Nos. 4 to 6 of Table 4, a cold-rolled steel sheet having a thickness of 1.6 mm was obtained by cold rolling the steel sheet at a cold-rolling rate of 52%, and thereafter, annealing was carried out on the cold-rolled steel sheet. The annealing was carried out by using a thermal treatment simulating device (CAL simulator) manufactured by SHINKU-RIKO, Inc. and changing the conditions shown in Table 4, that is, the annealing temperature and keeping time shown in Table 4 and the holding time at 500°C or higher shown in Table 4.

With respect to each of these various steel sheets, that is, the steel sheet of No. 1 as was hot-rolled, the steel sheets of Nos. 2, 3 and 7 to 21 as were cold-rolled, and the steel sheets of Nos. 4 to 6 that had been subjected to annealing after cold rolling, observation of a microstructure and measurement of pearlite area ratio were carried out, and also the dislocation density and the tensile strength were determined. The observation of the microstructure, measurement of pearlite area ratio, and measurement of the tensile strength are as follows. The dislocation density was determined by the method described in Example 2. Furthermore, the minimum heating temperature was measured in the same manner as in Example 2. The measurement of the minimum heating temperature was carried out by performing surface grinding to reduce the thickness to 1.4 mm and setting the thickness of any of the steel sheets to be constant before the thermal treatment. The results of these are shown in Table 4. In No. 14 of the following Table 4, the tensile strength of the steel sheet was considerably out of the prescribed range, so that the measurement of the minimum heating temperature was not carried out.

### Observation of microstructure and measurement of pearlite area ratio

The observation of the microstructure was carried out by SEM (Scanning Electron Microscope) observation of a 1/4 position of the thickness of the steel sheet at a magnification of 1000 times, and the pearlite area ratio in that field of view was calculated by the point counting method. The size of one field of view of the SEM micrograph is 90 µm × 120 µm. The mesh size in the point counting method was implemented by dividing one field of view longitudinally into 20 points and laterally into 20 points. In other words, measurement at 400 points was carried out for one field of view to determine the pearlite area ratio, and an average value of the pearlite area ratios in a sum of three fields of view was determined. The pearlite in the present invention includes a pseudo pearlite. The observation of the microstructure may be carried out at a 1/4 position in the coil width direction and at a 1/4 position of the thickness of the steel sheet as described above when the steel sheet is in a state of a product coil. Alternatively, the observation of the microstructure may be carried out at an arbitrary position of the steel sheet after the blanking and before the hot pressing.

### Measurement of tensile strength

From a steel sheet, a test piece having a JIS No. 5 shape was cut out as a test piece for tensile test. Further, with use of AG-IS 250kN autograph tensile tester manufactured by Shimadzu Corporation, the tensile strength of the steel sheet was determined by setting a strain rate: 10 mm/min and by the method defined in JIS Z 2241.

**[Table 3]**

| Steel type | Chemical component composition* (mass %) | | | | | | | | | | | | N × 48/14 (mass %) |
|---|---|---|---|---|---|---|---|---|---|---|---|---|---|
| | C | Si | Mn | P | S | sol.Al | Cr | N | B | Ti | Nb | V | |
| C | 0.22 | 1.13 | 2.22 | 0.009 | 0.001 | 0.050 | 0.02 | 0.0031 | 0.0021 | 0.031 | - | - | 0.011 |
| D | 0.27 | 1.21 | 2.23 | 0.003 | 0.001 | 0.040 | 0.02 | 0.0040 | 0.0020 | 0.020 | - | - | 0.014 |
| E | 0.27 | 1.18 | 2.25 | 0.003 | 0.001 | 0.040 | 0.02 | 0.0040 | 0.0020 | 0.020 | 0.050 | - | 0.014 |
| F | 0.27 | 1.21 | 2.26 | 0.003 | 0.001 | 0.040 | 0.02 | 0.0040 | 0.0020 | 0.050 | - | - | 0.014 |
| G | 0.27 | 1.20 | 2.27 | 0.003 | 0.001 | 0.040 | 0.02 | 0.0040 | 0.0020 | 0.020 | - | 0.050 | 0.014 |
| H | 0.26 | 1.21 | 2.28 | 0.0005 | 0.001 | 0.040 | 0.02 | 0.0040 | 0.0020 | 0.020 | - | - | 0.014 |
| I | 0.21 | 1.16 | 1.89 | 0.009 | 0.002 | 0.043 | 0.23 | 0.0040 | 0.0015 | 0.026 | - | - | 0.014 |
| J | 0.20 | 1.13 | 1.88 | 0.010 | 0.002 | 0.044 | 0.42 | 0.0054 | 0.0014 | 0.026 | - | - | 0.019 |

| | | | | | | | | | | | | | |
|---|---|---|---|---|---|---|---|---|---|---|---|---|---|
| *Balance: iron and inevitable impurities | | | | | | | | | | | | | |

**[Table 4]**

| No. | Steel type | Finishing rolling temperature | Coiling temperature during hot rolling | Thickness of hot-rolled steel sheet | Cold rolling rate | Thickness of cold-rolled steel sheet | Annealing | | Holding time at 500°C or higher | Microstructure** | Pearlite area ratio | Dislocation density | Steel sheet type | Tensile strength of steel sheet | Minimum heating temperature |
|---|---|---|---|---|---|---|---|---|---|---|---|---|---|---|---|
| | | | | | | | Temperature | Keeping time | | | | | | | |
| | | (°C) | (°C) | (mm) | (%) | (mm) | (°C) | (sec) | (sec) | | (%) | (×10¹⁴/m²) | | (MPa) | (°C) |
| 1 | AA | 920 | 650 | 3.2 | - | - | - | - | - | F+P | 47 | 1.03 | As is hot-rolled | 670 | 920 |
| 2 | AA | 920 | 650 | 3.2 | 39 | 2.0 | - | - | - | F+P | 45 | 26.3 | As is cold-rolled | 1045 | 840 |
| 3 | AA | 920 | 650 | 3.2 | 52 | 1.6 | - | - | - | F+P | 45 | 28.1 | As is cold-rolled | 1130 | 810 |
| 4 | AA | 920 | 650 | 3.2 | 52 | 1.6 | 545 | 83 | 400 | F+P | 46 | 20.1 | Cold rolled - annealed | 755 | 820 |
| 5 | AA | 920 | 650 | 3.2 | 52 | 1.6 | 665 | 54 | 250 | F+P | 45 | 1.2 | Cold rolled - annealed | 745 | 920 |
| 6 | AA | 920 | 650 | 3.2 | 52 | 1.6 | 550 | 120 | 600 | F+P | 45 | 4.51 | Cold rolled - annealed | 595 | 920 |
| 7 | C | 920 | 650 | 2.3 | 39 | 1.4 | - | - | - | F+P | 40 | 25.4 | As is cold-rolled | 970 | 840 |
| 8 | C | 920 | 650 | 2.3 | 13 | 2.1 | - | - | - | F+P | 35 | 5.0 | As is cold-rolled | 742 | 910 |
| 9 | C | 920 | 650 | 2.3 | 22 | 1.8 | - | - | - | F+P | 34 | 15.9 | As is cold-rolled | 831 | 855 |
| 10 | C | 920 | 650 | 3.5 | 60 | 1.4 | - | - | - | F+P | 40 | 29.1 | As is cold-rolled | 1032 | 810 |
| 11 | C | 880 | 650 | 2.3 | 39 | 1.4 | - | - | - | F+P | 21 | 27.1 | As is cold-rolled | 995 | 905 |
| 12 | C | 840 | 650 | 2.3 | 39 | 1.4 | - | - | - | F+P | 17 | 26.8 | As is cold-rolled | 987 | 920 |
| 13 | C | 920 | 600 | 2.3 | 39 | 1.4 | - | - | - | F+P | 41 | 29.6 | As is cold-rolled | 991 | 830 |
| 14 | C | 920 | 500 | 2.3 | 39 | 1.4 | - | - | - | B | 0 | 42.8 | As is cold-rolled | 1346 | - |
| 15 | D | 920 | 650 | 2.8 | 50 | 1.4 | - | - | - | F+P | 44 | 28.6 | As is cold-rolled | 987 | 820 |
| 16 | E | 920 | 650 | 2.8 | 50 | 1.4 | - | - | - | F+P | 39 | 26.3 | As is cold-rolled | 982 | 830 |
| 17 | F | 920 | 650 | 2.8 | 50 | 1.4 | - | - | - | F+P | 45 | 28.8 | As is cold-rolled | 990 | 835 |
| 18 | G | 920 | 650 | 2.8 | 50 | 1.4 | - | - | - | F+P | 47 | 25.4 | As is cold-rolled | 986 | 825 |
| 19 | H | 920 | 650 | 2.8 | 50 | 1.4 | - | - | - | F+P | 40 | 26.8 | As is cold-rolled | 982 | 820 |
| 20 | I | 920 | 650 | 2.3 | 39 | 1.4 | - | - | - | F+P | 40 | 24.8 | As is cold-rolled | 936 | 895 |
| 21 | J | 920 | 650 | 2.3 | 39 | 1.4 | - | - | - | F+P | 42 | 24.2 | As is cold-rolled | 941 | 890 |

| | | | | | | | | | | | | | | | |
|---|---|---|---|---|---|---|---|---|---|---|---|---|---|---|---|
| **F...ferrite, P...pearlite, B...bainite | | | | | | | | | | | | | | | |

From Tables 3 and 4, the following will be understood. As shown in No. 1, a tensile strength of 1100 MPa or less was achieved in the steel sheet as was hot-rolled; however, the prescribed amount of dislocation density was not ensured, and the minimum heating temperature for obtaining a strength of a certain degree or more during the hot pressing was high. In the steel sheet, it is difficult to sufficiently suppress the oxidization of the steel sheet surface and elimination of the galvanized layer during the hot pressing.

No. 2 shows a steel sheet obtained by further cold rolling the steel sheet at a cold-rolling rate of 39% on the steel sheet of No. 1. The cold-rolled steel sheet obtained in No. 2 had a high dislocation density, a low minimum heating temperature, and a tensile strength of 1100 MPa or less. On the other hand, No. 3 shows a steel sheet obtained by cold rolling the steel sheet at a cold-rolling rate which is higher than that of No. 2 on the steel sheet of No. 1. When the cold-rolling rate was enhanced as in No. 3, the tensile strength exceeded 1100 MPa, though the dislocation density was sufficiently high and the minimum heating temperature was low. When blanking is performed on a steel sheet having such a high tensile strength, damage or abrasion of the tool used in the blanking is liable to occur.

Nos. 4 to 6 show examples in which annealing was performed under various conditions on the cold-rolled steel sheet of No. 3. Among these, in No. 4, annealing was performed under suitable conditions, and accordingly, tensile strength reduction of the steel sheet was achieved while ensuring a needed dislocation density.

In contrast, in No. 5, the annealing temperature was 665°C which exceeded the upper limit of the prescribed temperature range, and accordingly, decrease in the dislocation density that had been ensured by cold rolling was considerable, and the minimum heating temperature was high. In the steel sheet, it is difficult to sufficiently suppress the oxidization of the steel sheet surface and elimination of the galvanized layer during the hot pressing, as in No. 1. Also, in No. 6, though the annealing temperature was appropriate, the holding time at 500°C or higher exceeded the prescribed range, and accordingly, the dislocation density decreased, and the minimum heating temperature was high.

Nos. 7 to 21 show examples using the steel types of Table 3. Among these, Nos. 7 to 14 show examples in which the steel type C was used, and the steel sheet as was cold-rolled was produced by changing the finishing rolling temperature, coiling temperature, and cold-rolling rate. Among these examples, in No. 8, the cold-rolling rate was too low, and accordingly, a sufficient amount of dislocation density could not be ensured, and the minimum heating temperature was high. In Nos. 11 and 12, the finishing rolling temperature was below the prescribed range, and accordingly, ferrite was large in amount, and a predetermined amount of pearlite could not be ensured. In these examples, pearlite was insufficient in amount, and accordingly the minimum heating temperature was high, though the tensile strength of the steel sheet was low because the ferrite amount was large. In No. 14, the coiling temperature was too low, and accordingly, pearlite could not be ensured, and the structure was made of bainite alone, so that the tensile strength exceeded 1100 MPa. When blanking is performed on a steel sheet having such a high tensile strength, damage or abrasion of the tool used in the blanking is liable to occur, in the same manner as in No. 3. In contrast, in Nos. 7, 9, 10, and 13, the steel sheet was produced under suitable conditions, and accordingly, tensile strength reduction of the steel sheet was achieved while ensuring a needed dislocation density. Also, Nos. 15 to 21 show examples in which the steel types D to J of Table 3 were used. In these examples as well, the steel sheet was produced under suitable conditions, and accordingly, tensile strength reduction of the steel sheet was achieved while ensuring a needed dislocation density.

As described above, the steel sheet for hot pressing as prescribed in the present invention enables good performance of blanking, and can make the heating temperature of hot pressing be of a comparatively lower degree, so that the oxidization of the steel sheet surface and elimination of the galvanized layer that possibly occur during the heating of hot pressing can be suppressed.

## Claims

1. A steel sheet for hot pressing, containing, in mass%:
C: 0.15% or more to 0.40% or less,
Si: 1.00% or more to 2.00% or less,
Mn: 1.50% or more to 3.00% or less,
Ti: (N×48/14)% or more to 0.10% or less,
B: 0.0005% or more to 0.0050% or less,
Al: more than 0% to 0.10% or less,
P: more than 0% to 0.05% or less,
S: more than 0% to 0.01% or less, and
N: more than 0% to 0.010% or less,
with the balance being iron and inevitable impurities, and having a dislocation density of 10 × 10¹⁴/m² or more, an area ratio of pearlite relative to a whole structure being 30% or more, and a tensile strength of 1100 MPa or less.

2. The steel sheet for hot pressing according to claim 1, further containing, in mass%, one or more of the following (i) to (iii):
(i) at least one element selected from Mo and Cr in a sum of more than 0% to 0.50% or less,
(ii) at least one element selected from Cu and Ni in a sum of more than 0% to 0.50% or less, and
(iii) at least one element selected from the group consisting of Nb, V, and Zr in a sum of more than 0% to 0.10% or less.

3. The steel sheet for hot pressing according to claim 1, having a zinc-based plating layer or an aluminum-based plating layer on at least one surface of the steel sheet.

4. The steel sheet for hot pressing according to claim 2, having a zinc-based plating layer or an aluminum-based plating layer on at least one surface of the steel sheet.

5. A method for producing a steel sheet for hot pressing according to any one of claims 1 to 4, the method comprising, in order:
coiling a steel satisfying a component composition of the steel sheet at 550°C or higher after hot-rolling the steel at a finishing rolling temperature: 890 to 950°C; and
cold-rolling the steel sheet at a cold rolling rate of 20% or more, wherein
the method further comprises, when the tensile strength of the steel sheet after the cold rolling exceeds 1100MPa, annealing the steel sheet under conditions with an annealing temperature: 500°C or higher to 640°C or lower and a holding time of 500 seconds or less in a temperature range of 500°C or higher, after the cold rolling.

6. A method for producing a steel member, comprising using a steel sheet for hot pressing according to any one of claims 1 to 4, and performing hot pressing after heating at a heating temperature: 700 to 900°C.
